# EUROPÄISCHE PATENTSCHRIFT

(11) **EP 2 953 750 B1**
(45) Veröffentlichungstag und Bekanntmachung des Hinweises auf die Patenterteilung: **26.06.2024**
(21) Anmeldenummer: 14705062.9
(22) Anmeldetag: 04.02.2014
(51) Int. Cl.: B23B 31/02, B23B 31/117, B23Q 11/00

(54) **WERKZEUGSPANNFUTTER MIT SCHWINGUNGSREDUZIERUNG**
TOOL CHUCK WITH VIBRATION REDUCTION
MANDRIN DE SERRAGE D'OUTIL À RÉDUCTION DE VIBRATIONS

(30) Priorität: 05.02.2013 DE 102013001907; 25.02.2013 DE 102013101854
(43) Veröffentlichungstag der Anmeldung: 16.12.2015
(73) Patentinhaber: Franz Haimer Maschinenbau KG, 86568 Hollenbach-Igenhausen (DE)
(72) Erfinder: HAIMER, Franz, 86568 Hollenbach-Igenhausen (DE)
(74) Vertreter: Schwarz, Wolfgang
(86) Internationale Anmeldenummer: PCT/EP2014/052090
(87) Internationale Veröffentlichungsnummer: WO 2014/122106

(56) Entgegenhaltungen:
- EP-A1- 1 266 710
- WO-A1-2009/022712
- DE-A1-102004 019 869
- DE-A1-102004 054 550
- JP-A- 2012 056 057
- US-A- 2 829 899
- US-A1- 2003 147 712
- US-A1- 2004 051 257

## Beschreibung

Die Erfindung betrifft ein Werkzeugspannfutter gemäß dem Oberbegriff des Anspruchs 1, 11 oder 13 für ein sich im Betrieb um eine Rotationsachse drehendes Werkzeug, insbesondere ein Bohr-, Fräs-, Reib- oder Schleifwerkzeug. Ein solches Werkzeugspannfutter ist aus DE 10 2004 019869 A1 bekannt.

Das Werkzeugspannfutter kann ein- oder mehrteilig sein. Typischerweise weist es auf seiner bestimmungsgemäß der Werkzeugmaschine zugewandten Seite einen Kupplungsabschnitt zum Ankuppeln an dieselbe auf und an seiner der Werkzeugmaschine abgewandten Seite eine Hülsenpartie zum Einspannen eines Werkzeugschafts.

Nicht zuletzt dann, wenn solche Werkzeugspannfutter dazu verwendet werden, um Werkzeuge in Gestalt von mit hoher Geschwindigkeit rotierenden Fräsern zu halten, bei denen die Zahl der momentan mit dem zu zerspanenden Werkstoff in Kontakt stehenden Schneiden naturgemäß permanent schwankt, tritt das Problem auf, dass die Hülsenpartie solcher Werkzeugspannfutter zu störenden Schwingungen angeregt wird.

Insbesondere treten an der Hülsenpartie Biegeschwingungen auf, durch Biegung der Hülsenpartie um eine im Wesentlichen zur Rotationsachse senkrechten Biegeachse. Mitunter treten auch Torsionsschwingungen durch ein federndes Nachgeben der Hülsenpartie um ihre Rotationsachse auf. In der Praxis treten auch Mischformen dieser Schwingungen auf, oft überwiegt der Radialanteil jedoch. Jegliche Schwingungen schränken unter Umständen die mit dem Werkzeug erreichbare Bearbeitungspräzision ein. Nicht selten beeinflussen solche Schwingungen auch die Standzeit der Werkzeugschneiden negativ.

Es hat im Stand der Technik nicht an Versuchen gefehlt, Werkzeugspannfutter mit verringerter Schwingungsneigung zu konstruieren, indem man in die Werkzeugspannfutter längliche Massekörper einbaute, deren Masse oder Eigenschwingverhalten das Schwingungsverhalten des Werkzeugspannfutters insgesamt verbesserte. Da man bisher allerdings davon ausging, dass die Massekörper nur dann hinreichend wirksam werden können, wenn sie eine beträchtliche Erstreckung in Richtung der Rotationsachse aufweisen, zeichnen sich die bisher bekannten, schwingungsgedämpften Werkzeugspannfutter dadurch aus, dass sie eine beträchtliche Baulänge aufweisen. Das ist für nicht wenige Anwendungsfälle hinderlich.

Demgegenüber ist es die Aufgabe der Erfindung, kompakte Werkzeugspannfutter zur Verfügung zu stellen, die nur eine verringerte Schwingungsneigung zeigen.

Diese Aufgabe wird mit den Merkmalen des Anspruchs 1 gelöst. Erfindungsgemäß wird ein Werkzeugspannfutter gemäß dem Anspruchs 1, 11 oder 13 zum Spannen eines Werkzeugs in einer Werkzeugmaschine mit einem Grundkörper und einer davon abstehenden Hülsenpartie, die eine Werkzeugaufnahme zum kraftschlüssigen Festsetzen eines Werkzeugschafts ausbildet, beansprucht. Dabei ist in dem Werkzeugspannfutter eine Kavität ausgebildet, in der ein schwingungsdämpfendes Bauteil angeordnet ist, bei dem es sich vorzugsweise um ein zusätzliches, getrennt vom Grundkörper und der Hülsenpartie ausgebildetes Bauteil handelt. Vorzugsweise beginnt die Kavität im Bereich des Übergangs vom Grundkörper zur Hülsenpartie und erstreckt sich von dort aus entlang der Rotationsachse in Richtung hin zu der Werkzeugaufnahme.

Dabei ist es idealerweise so, dass die Kavität in Richtung entlang der Rotationsachse eine Länge aufweist, die weniger als 2/5 und vorzugsweise weniger als 1/5 der Länge der Werkzeugaufnahme in dieser Richtung beträgt. Anders, als bisher im Stand der Technik gelehrt, werden die Länge der Kavität und des hierin aufgenommenen schwingungsreduzierenden Bauteils in Richtung Rotationsachse kurz gehalten. Zugleich werden die Kavität und damit auch die räumliche Lokalisation des von ihr aufgenommenen schwingungsreduzierenden Bauteils auf den Nahbereich des Übergangs vom Grundkörper in die Hülsenpartie konzentriert.

Mit dieser besonderen Ausführungsform wird von dem bisherigen Konzept abgegangen, das schwingungsreduzierende Bauteil auch in einem Bereich fernab vom Übergang zwischen dem Grundkörper und der Hülsenpartie anzuordnen und ihm eine beträchtliche Länge und hierdurch auch eine beträchtliche Masse zu verleihen, um auf diese Art und Weise eine möglichst gute Wirkung herbeizuführen. Überraschenderweise hat sich dabei gezeigt, dass auch ein vergleichsweise zierlich ausgestaltetes schwingungsreduzierendes Bauteil immer dann, wenn es im Nahbereich des Übergangs vom Grundkörper in die Hülsenpartie angeordnet ist, eine beträchtliche Wirkung entfaltet, die so nicht zu erwarten war.

Das gilt insbesondere dann, wenn auch die Hülsenpartie in Richtung der Rotationsachse sehr kompakt ausgestaltet wird, indem sich die Länge der Hülsenpartie im Wesentlichen auf die Länge der Werkzeugaufnahme (einschließlich ihres der Längeneinstellung des Werkzeugs dienenden Auslaufs, der im Rahmen dieser Beschreibung vom Begriff Werkzeugaufnahme umfasst wird) beschränkt. Das ist der Fall, wenn die Länge der Werkzeugaufnahme mehr als 3/4 und besser mehr als 4/5 der Gesamtlänge der Hülsenpartie ausmacht.

Dabei hat es sich als besonders wirksam erwiesen, die Kavität so anzuordnen, dass sie sich unmittelbar an den Bereich des Durchmessersprungs anschließt, an dem die Hülsenpartie in den Grundkörper übergeht oder sogar mitsamt des in sie eingelegten schwingungsreduzierenden Bauteils innerhalb dieses Bereichs liegt, so dass der Durchmessersprung - in Richtung der Rotationsachse gesehen - auf der Höhe der die Kavität begrenzenden Umfangswand stattfindet.

Zweckmäßigerweise durchdringt die Kavität den Halteflansch nicht vollständig und reicht daher nicht bis in den Kupplungsabschnitt hinein.

Vorteilhafterweise ist die Kavität in Umfangsrichtung von einer Fügestelle zwischen dem Grundkörper und der Hülsenpartie umgriffen, die bevorzugt als Schweißnaht ausgebildet ist. Der Grundkörper und die Hülsenpartie werden also in einem Bereich zusammengeschweißt, der die Umfangsbegrenzung der besagten Kavität bildet. Alternativ kann eine Klebung vorgesehen sein, ein Verschweißen ist jedoch bevorzugt.

Erfindungsgemäß ist das schwingungsreduzierende Bauteil als Ringscheibe mit einer zentrischen Öffnung ausgebildet. Eine solche zentrische Öffnung dient als Durchlass für den sich durch das Werkzeugspannfutter hindurch erstreckenden Kanal, über den dem Werkzeug Kühlschmierstoff zugeführt werden kann. Erfindungsgemäß ist die maximale Erstreckung Bₘₐₓ der Scheibe parallel zur Rotationsachse kleiner als der maximale Durchmesser Dₘₐₓ der Scheibe, vorzugsweise gilt Bₘₐₓ / Dₘₐₓ ≤ 2 und idealerweise gilt Bₘₐₓ / Dₘₐₓ ≤ 3. Vorzugsweise ist die Scheibe aus einem Metall, insbesondere einem Schwermetall oder einem Metall und insbesondere Schwermetall enthaltenden Material hergestellt. Als Schwermetall im Sinne der Erfindung wird jedes Metall verstanden, das ein um mindestens 10 % höheres, spezifisches Gewicht aufweist als unlegierter Stahl. Ein Schwermetall, das zum Einsatz im Rahmen der Erfindung prädestiniert ist, ist Kupfer. Kupfer ist preisgünstig verfügbar, gut handhabbar und weist bei erfindungsgemäßem Einsatz spürbar bessere Dämpfungseigenschaften auf als Stahl. Wegen seines ausgesprochen hohen Gewichts ist aber beispielsweise auch Wolfram sehr gut geeignet, auch Blei kann zum Einsatz kommen.

Darüber hinaus hat es sich als sehr günstige Alternative erwiesen, die Scheibe aus einer besonders stark schwingungsdämpfenden Metalllegierung herzustellen, wie sie zur Zeit beispielsweise die Firma Les Bronzes d'Industrie, 26 rue de la République, 57360 Amneville, Frankreich, unter der Markenbezeichnung EXIUM^{®} AM anbietet.

Erfindungsgemäß liegt die Scheibe mit mindestens einer ihrer Umfangsflächen unmittelbar gegen eine korrespondierende Umfangsfläche der Hülsenpartie und/oder des Grundkörpers an. Hierdurch kann die Scheibe ganz einfach in einer relativ zur Rotationsachse zentrischen Position gehalten werden, während sie im Wesentlichen über ihre Stirnflächen so auf den Grundkörper bzw. die Hülsenpartie einwirkt, dass es zu einer Verminderung der unerwünschten Schwingungen kommt.

Die Wirkung der Scheibe kann sich darin erschöpfen, dass sie schlicht und einfach durch ihre Masse das Schwingungsverhalten der Hülsenpartie positiv beeinflusst.

Vorzugsweise wird die Scheibe dazu herangezogen, um die Hülsenpartie unter eine in Richtung der Rotationsachse wirkende Vorspannung zu setzen. Zu diesem Zweck wird die maximale Erstreckung Bₘₐₓ der Scheibe so gewählt, dass die Stirnflächen der Hülsenpartie und des Grundkörpers nicht gegeneinander anliegen, wenn diese beiden Teile unter Zwischenfügung der Scheibe zusammengesetzt werden. Sodann wird der Zusammenbau mit Hilfe einer Presse zusammengedrückt, so dass sich die Stirnflächen der Hülsenpartie und des Grundkörpers unter elastischer Verformung der Scheibe aneinander annähern, woraufhin sie miteinander verschweißt werden. Die elastisch zusammengedrückte Scheibe erzeugt eine dauerhafte Vorspannung in der Hülsenpartie, was positiven Einfluss auf deren Schwingungsverhalten hat.

Erfindungsgemäß liegt die Scheibe mit einer Umfangsfläche über eine Zwischenlage aus Kunststoff und/oder Elastomer gegen eine korrespondierende Umfangsfläche der Hülsenpartie und/oder des Grundkörpers an, derart, dass die Scheibe im bestimmungsgemäßen Betrieb in radialer Richtung Relativbewegungen zu der Hülsenpartie und dem Grundkörper ausführen kann. Auf diese Art und Weise kann die Scheibe ihrerseits zu Schwingungen in radialer Richtung angeregt werden, die sich den störenden Schwingungen, die die Hülsenpartie zeigt, so überlagern. Vorzugsweise ist die Scheibe dabei mit ihren Stirnflächen nicht oder nicht so stark zwischen korrespondierenden Stirnflächen der Hülsenpartie und des Grundkörpers eingeklemmt, dass sich eine wesentliche Einschränkung ihrer Beweglichkeit in radialer Richtung ergibt. Vielmehr kann die Scheibe zu Schwingungen in radialer Richtung angeregt werden. Diese Schwingungen überlagern sich mit den Schwingungen der Hülsenpartie, wodurch das Schwingungsverhalten der Hülsenpartie vorteilhaft beeinflusst wird, weil es zu einer zumindest teilweisen Auslöschung der störenden Schwingungen der Hülsenpartie kommt. Die Scheibe wirkt sozusagen als Schwingungstilger.

Erfindungsgemäß ist das schwingungsreduzierende Bauteil innerhalb des Werkzeugspannfutters so gehalten und dabei so ausgestaltet, dass es im Betrieb zu Schwingungen in sich angeregt wird - so, dass ein frei in die Kavität des Werkzeugspannfutters hineinragender Teil des Federelementes im Betrieb gegenüber dem am Werkzeugspannfutter festgesetzten Teil des Federelementes zu schwingen beginnt. Auch auf diese Art und Weise können Schwingungen des schwingungsreduzierenden Bauteils erzeugt werden, die die störenden Schwingungen der Hülsenpartie wiederum so überlagern, dass es zumindest teilweise zu deren Auslöschung kommt. Diese Bauart ist also eine andere Variante eines Schwingungstilgers.

Zur Verwirklichung des soeben beschriebenen Schwingungstilgers ist es besonders vorteilhaft, wenn die Hülsenpartie an ihrer dem Grundkörper zugewandten Stirnseite einen ersten Ringflansch zur Verbindung mit dem Grundkörper und einen zweiten, konzentrisch innerhalb des ersten Ringflansches angeordneten und auch in fertig montiertem Zustand nicht unmittelbar mit dem Grundkörper in Kontakt tretenden Flansch aufweist. An letzterem ist ein Abschnitt des Federelements festgesetzt, während ein der Befestigungsstelle abgewandter Abschnitt des Federelements frei in die Kavität des Werkzeugspannfutters hineinragt, wodurch dieser Abschnitt des Federelements gegenüber dem an der Hülsenpartie festgesetzten Teil des Federabschnitts zu Schwingungen angeregt werden kann.

Das schwingungsreduzierende Bauteil kann so gestaltet sein, dass der überwiegende Teil seines erfindungsgemäß genutzten Federweges nicht durch die auch jedem massivem Materialkörper inhärente Elastizität erzeugt wird, sondern durch die räumliche Ausgestaltung des Federelements, durch die eine wesentliche Vergrößerung des Federweges erreicht wird, verglichen mit einem entsprechenden Massivkörper.

Vorteilhafterweise besteht das Federelement aus mindestens zwei, idealerweise mindestens drei ineinander liegenden Ringen, die untereinander durch bei diesem Ausführungsbeispiel im Wesentlichen in radialer Richtung verlaufende Stege miteinander in Verbindung stehen.

Durch die Auslegung des Federelements kann das Eigenschwingungsverhalten und damit das Tilgungsverhalten des Federelements in weitem Umfang beeinflusst werden.

Erfindungsgemäß sind der Grundkörper und die Hülsenpartie nicht unmittelbar, sondern unter Vermittlung einer dämpfend wirkenden Materialschicht kraftschlüssig zusammengefügt, die das Bindeglied zwischen dem Grundkörper und der Hülsenpartie darstellt. Dies wirkt sich günstig auf das Schwingungsverhalten der Hülsenpartie aus, und die Schwingungen der Hülsenpartie werden nicht ungehindert auf die Spindel der Werkzeugmaschine übertragen.

Die von der dämpfend wirkenden Materialschicht ausgefüllte Fuge zwischen der Hülsenpartie und dem Grundkörper ist vorzugsweise keiloder kegelförmig ausgebildet, so dass die Hülsenpartie und der Grundkörper durch in Richtung der Rotationsachse wirkende Druckkräfte zentrierend ineinander gepresst werden.

Erfindungsgemäß ist die die Fuge bildenden Stirnflächen der Hülsenpartie und/oder des Grundkörpers mit Hinterschneidungen ausgestattet, in die die dämpfend wirkende Materialschicht zur Herstellung eines Formschlusses eindringen kann. Auf diese Art und Weise wird für eine besonders sichere Verankerung der dämpfend wirkenden Materialschicht an dem Grundkörper und/oder der Hülsenpartie gesorgt.

Statt echten Hinterschneidungen kann gegebenenfalls auch nur eine Profilierung der entsprechenden Stirnfläche vorgesehen sein.

Weitere Ausgestaltungsmöglichkeiten, Wirkungsweisen und Vorteile der Erfindung ergeben sich aus der nachfolgenden Beschreibung von verschiedenen Ausführungsbeispielen der Erfindung anhand der Figuren.
Die Figur 1 zeigt ein Werkzeugspannfutter eines nicht erfindungsgemäßen Beispiels im Schnitt entlang der Rotationsachse R.
Die Figur 2 zeigt eine perspektivische Seitenansicht des von Figur 1 gezeigten Werkzeugspannfutters.
Die Figur 3 zeigt ein Werkzeugspannfutter eines Ausführungsbeispiels der Erfindung im Schnitt entlang der Rotationsachse R.
Die Figur 4 zeigt einen Schnitt durch das von Figur 3 gezeigte Werkzeugspannfutter entlang der Schnittlinie A-A.
Die Figur 5 zeigt eine perspektivische Seitenansicht des von den Figuren 3 und 4 gezeigten Werkzeugspannfutters.
Die Figur 5a zeigt eine erste Variante des von den Figuren 3 bis 5 beschriebenen Ausführungsbeispiels.
Die Figur 5b zeigt einen vergrößerten Ausschnitt aus der Figur 5a. Die Figur 5c zeigt eine Abwandlungsmöglichkeit der von den Figuren 5a und 5b gezeigten ersten Variante.
Die Figur 5d zeigt eine zweite Variante des von den Figuren 3 bis 5 beschriebenen Ausführungsbeispiels.
Die Figur 5e zeigt einen vergrößerten Ausschnitt aus der Figur 5c.
Die Figur 6 zeigt ein Werkzeugspannfutter eines Ausführungsbeispiels der Erfindung im Schnitt entlang der Rotationsachse R.
Die Figur 7 zeigt das Ausführungsbeispiel gemäß Figur 6 in einem Schnitt entlang der Schnittlinie B-B.
Die Figur 8a zeigt eine Ausschnittvergrößerung des mit dem Buchstaben X markierten Bereichs der Figur 7.
Die Figur 8b zeigt eine Ausschnittvergrößerung des mit den Buchstaben XX markierten Bereichs der Figur 6.
Die Figur 9 zeigt eine perspektivische Seitenansicht des von den Figuren 6 bis 8 gezeigten Werkzeugspannfutters.
Die Figur 10 zeigt ein Werkzeugspannfutter eines Ausführungsbeispiels der Erfindung im Schnitt entlang der Rotationsachse R.
Die Figur 11 zeigt einen Schnitt durch das von Figur 10 gezeigte Werkzeugspannfutter entlang der Schnittlinie C-C.
Die Figur 12 zeigt eine perspektivische Seitenansicht des von den Figuren 10 und 11 gezeigten Werkzeugspannfutters.

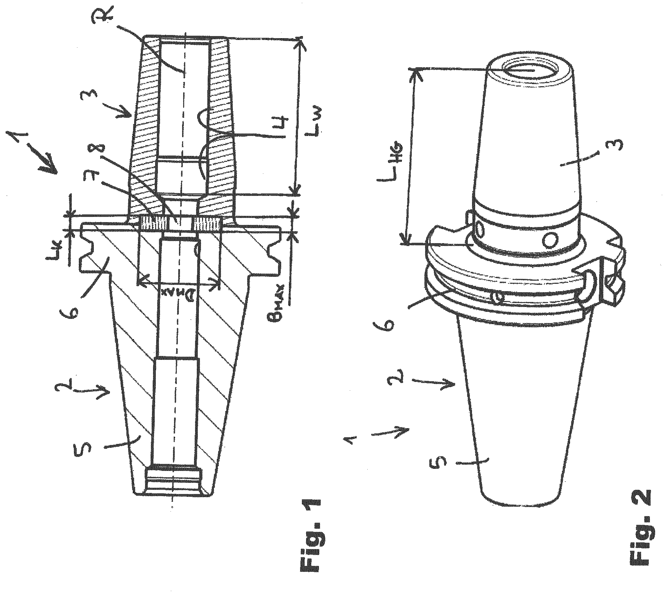

Die Figur 1 zeigt ein vollständiges Werkzeugspannfutter 1. Dieses Werkzeugspannfutter 1 besteht aus einem Grundkörper 2 und einer davon abstehenden Hülsenpartie 3. Im Inneren der Hülsenpartie 3 ist eine Werkzeugaufnahme 4 ausgebildet.

Das Werkzeugspannfutter ist hier als sogenanntes Schrumpffutter ausgeführt. Der Innendurchmesser der in der Hülsenpartie 3 ausgebildeten Werkzeugaufnahme 4 ist etwas kleiner als der Außendurchmesser des nicht gezeigten Werkzeugschafts, so dass die Hülsenpartie 3 den nicht gezeigten Werkzeugschaft fest im Presssitz hält, sobald die Hülsenpartie 3 nach dem Einsetzen des Werkzeugschafts wieder abgekühlt ist. Wegen der diesbezüglichen Einzelheiten wird auf das europäische Patent EP 1 804 900 der Anmelderin verwiesen.

Die Anwendung der Erfindung ist für sogenannte Schrumpffutter, die im Regelfall aus einer massiven, in sich keine wesentlichen Unterbrechungen zeigenden Hülsenpartie 3 bestehen, besonders vorteilhaft. Der für die Erfindung beanspruchte Schutz ist jedoch nicht von vorneherein hierauf beschränkt, sondern kann beispielsweise auch für Werkzeugspannfutter des Weldon-Typs, des Wistle-Notch-Typs oder für Spannzangenaufnahmen zum Einsatz kommen. Wie man recht gut anhand der Figur 1 sieht, besitzt der Grundkörper 2 einen Kupplungsabschnitt 5. Dieser dient dazu, die Einheit aus dem Werkzeugspannfutter 1 und dem davon gehaltenen Werkzeug an eine Werkzeugmaschine anzukuppeln. Der Kupplungsabschnitt 5 ist hier als Steilkegel-Kupplungsschaft ausgeführt, was vorteilhaft ist, worauf der Schutz jedoch nicht beschränkt ist, vergleiche auch die anderen von den Figuren gezeigten Ausführungsbeispiele, die zum Teil eine Hohlschaftkupplung (HSK-Kupplung) zeigen. Der Kupplungsschaft trägt als solcher nicht zur Entstehung von Schwingungen bei, da er sich nicht zuletzt aufgrund seiner Einspannung in der Spindel der Werkzeugmaschine ausgesprochen steif verhält.

Ferner besitzt der Grundkörper 2 im Regelfall einen Halteflansch 6, an dem ein wie auch immer geartetes Handlingsystem ansetzen kann, um das Werkzeugspannfutter 1 beim automatischen Werkzeugwechsel handhaben zu können. Aufgrund seines großen Durchmessers trägt auch der Halteflansch selbst tendenziell nicht zur Entstehung von Schwingungen bei.

Im Anschluss an den Halteflansch 6 geht der Grundkörper 2 im Regelfall mit einem Durchmessersprung in die Hülsenpartie 3 über.

Ausweislich der Figur 1 beginnt im Bereich dieses Übergangs zwischen dem Grundkörper 2 und der Hülsenpartie 3 eine Kavität, die sich in Richtung der Rotationsachse R hin zu der Werkzeugaufnahme 4 erstreckt. Die Kavität kann dabei noch ein Stück weit in den Bereich des Halteflansches 6 hineinragen, durchdringt diesen aber nicht bis in den Kupplungsabschnitt 5 hinein. Der maximale Durchmesser der Kavität ist größer als der maximale Durchmesser der Werkzeugaufnahme bzw. des Kanals zur Versorgung des Werkzeugs mit Kühlschmierstoff. In dieser Kavität, die der Grundkörper 2 und die Hülsenpartie 3 zwischen sich ausbilden, ist ein hier als separates Bauteil ausgeführtes schwingungsreduzierendes Bauteil 7 gefangen. Die Kavität ist in Richtung der Rotationsachse R auffallend kurz ausgebildet, ihre Länge L_{K} beträgt hier weniger als 1/9 der Länge L_{W} der Werkzeugaufnahme. Das schwingungsreduzierende Bauteil 7 füllt die Kavität im Wesentlichen vollständig aus, so dass Entsprechendes für die in Richtung der Rotationsachse betrachtete Länge des schwingungsreduzierenden Bauteils gilt.

Darüber hinaus führt die Figur 1 sehr anschaulich vor Augen, dass die Gesamtlänge L_{HG} der Hülsenpartie auf das Nötigste beschränkt ist. Die Länge L_{W} der in der Hülsenpartie ausgebildeten Werkzeugaufnahme macht mehr als 4/5 der Gesamtlänge L_{HG} der Hülsenpartie aus.

Das schwingungsreduzierende Bauteil 7 ist hier als ein Ring aus Schwermetall ausgeführt und/oder als ein Ring aus besonders stark schwingungsdämpfendem Metall, wie es zur Zeit beispielsweise die Firma Les Bronzes d'Industrie, 26 rue de la République, 57360 Amneville, Frankreich, unter der Markenbezeichnung EXIUM^{®} AM anbietet.

Anhand der Figur 1 ist deutlich zu erkennen, dass die maximale Erstreckung Bₘₐₓ der Ringscheibe bzw. des Rings parallel zur Rotationsachse um mehr als den Faktor 4 kleiner ist als der maximale Durchmesser Dₘₐₓ des Rings. Im Bereich seiner Mitte besitzt dieser Ring eine Öffnung 8, mit deren Hilfe ein durch den Grundkörper 2 und die Hülsenpartie 3 hindurchgehender und bis in den Bereich der Werkzeugaufnahme 4 hineinreichender Kanal geschaffen wird, über den beispielsweise eine Kühlmittelzufuhr erfolgen kann. Sofern kein solcher Kanal benötigt wird, kann der Ring auch als durchgehende Scheibe ausgebildet werden, was in den Figuren nicht illustriert ist.

Der Ring ist ohne Einfügung einer elastischen Zwischenlage in die Kavität eingesetzt. Er liegt an seinem Außenumfang unmittelbar gegen den Innenumfang der Hülsenpartie 3 bzw. des Grundkörpers 2 an und wird in zentrierter Position in Bezug auf die Rotationsachse R gehalten. Die den Ring aufnehmende Kavität ist hier so dimensioniert, dass die Stirnflächen des Rings mit einer bestimmten Vorspannung gegen die entsprechenden Stirnflächen der Kavität anliegen - der Ring wird in der Kavität eingeklemmt gehalten und vermittelt der Hülsenpartie 3 so zumindest bereichsweise eine Vorspannung, die sich positiv auf das Schwingungsverhalten der Hülsenpartie auswirkt.

Die besagte Vorspannung ist aber nicht der einzige Effekt, den man sich bei Verwendung eines solchen Rings zu Nutze machen kann.

Vielmehr kann das schwingungsreduzierende Bauteil 7 in Gestalt des Rings auch zusätzlich oder stattdessen dadurch einen positiven Effekt ausüben, dass es im Zuge der Radialschwingungen bzw. der "walkenden" Bewegung der sich drehenden Hülsenpartie 3 in schneller Folge zusammengepresst und wieder zumindest teilweise entspannt wird und dadurch einen dämpfenden Effekt bewirkt. Nicht zuletzt im Hinblick auf diesen Effekt kann es sinnvoll sein, den Ring mit einem oder mehreren örtlichen Schlitzen zu versehen, die diesen Effekt unterstützen (nicht von den Figuren gezeigt).

Bei dem hier gezeigten Ausführungsbeispiel haben der Grundkörper 2 und die Hülsenpartie 3 ursprünglich zwei separate Bauteile gebildet, die in einem nachfolgenden Schritt miteinander verschweißt worden sind - was aber nicht die einzige Herstellungsmöglichkeit bildet, dazu sogleich.

Entscheidet man sich für diese vorteilhafte Herstellungsmöglichkeit, dann ist es zweckmäßig, dass jedes dieser Bauteile an seiner zur Anlage an dem jeweils anderen Bauteil gedachten Stirnfläche eine Eindrehung aufweist, so dass diese beiden Bauteile nach ihrer Verbindung durch die Schweißnaht 9 gemeinsam die in sich geschlossene Kavität aufweisen, die das schwingungsreduzierende Bauteil 7 in Gestalt des Rings aufnimmt. Die durch das spätere Verschweißen unter Umständen ganz oder teilweise verschwundene Trennfuge zwischen dem Grundkörper 2 und der Hülsenpartie 3 spannt also eine Ebene auf, die die Kavität berührt oder schneidet. Somit liegt das schwingungsreduzierende Bauteil 7 genau in dem Übergang zwischen dem Grundkörper 2 und der Hülsenpartie 3. Die Vorspannung, mit der das schwingungsreduzierende Bauteil 7 mit seinen Stirnflächen gegen die entsprechenden Stirnflächen des Grundkörpers 2 und der Hülsenpartie 3 anliegt, kann dabei bequem dadurch eingestellt werden, dass der Grundkörper 2 und die Hülsenpartie 3 während ihres Verschweißens entsprechend fest aneinander gedrückt werden. Selbstverständlich wird beim Verschweißen durch entsprechende Wahl der Schweißparameter darauf geachtet, dass die Wurzel der Schmelze nicht bis unmittelbar an das schwingungsreduzierende Bauteil 7 heranreicht, denn das Anschmelzen des schwingungsreduzierenden Bauteils 7 könnte die Qualität der Schweißnaht beeinträchtigen.

Der Vollständigkeit halber ist festzuhalten, dass das Ausführungsbeispiel auch dadurch abgewandelt werden kann, dass nur die Hülsenpartie 3 oder nur der Grundkörper 2 an seiner Stirnseite eine Eindrehung bzw. wie auch immer erzeugte Ausnehmung aufweist, die zur (fast vollständigen) Aufnahme des schwingungsreduzierenden Bauteils 7 in Gestalt des Rings dient.

Wie oben bereits angedeutet, ist das Verschweißen eines separat hergestellten Grundkörpers 2 mit einer Hülsenpartie 3 nicht die einzige Art und Weise, eine erfindungsgemäße Werkzeugaufnahme herzustellen. Stattdessen gestatten es moderne Technologien, wie etwa das Laser-Sintern, die Werkzeugaufnahme einstückig herzustellen und dabei das schwingungsreduzierende Bauteil 7, das auch hier aus einem anderen Werkstoff gefertigt ist, in der Position einzuschließen, die die Figur 1 für die Schweißkonstruktion zeigt.

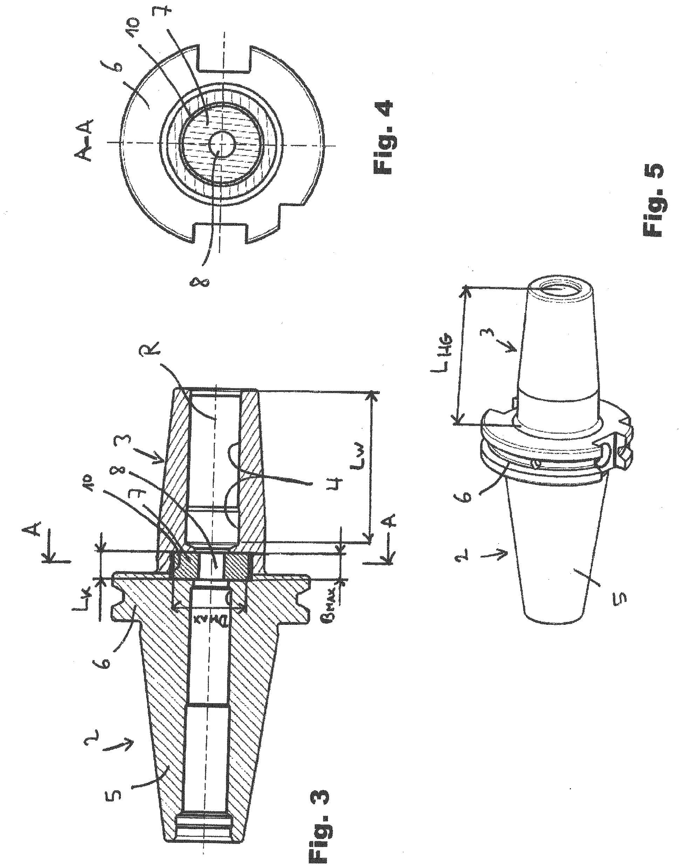

Die Figuren 3 bis 5 zeigen ein Ausführungsbeispiel der Erfindung.

Ausweislich der Figur 3 beginnt bei diesem Ausführungsbeispiel im Bereich dieses Übergangs zwischen dem Grundkörper 2 und der Hülsenpartie 3 eine Kavität, die sich in Richtung der Rotationsachse R hin zu der Werkzeugaufnahme 4 erstreckt und die noch ein Stück weit in den Bereich des Halteflansches 6 hineinragt, diesen aber nicht bis in den Kupplungsabschnitt 5 hinein durchdringt.

Der maximale Durchmesser der Kavität ist auch hier größer als der maximale Durchmesser der Werkzeugaufnahme bzw. des Kanals zur Versorgung des Werkzeugs mit Kühlschmierstoff.

In dieser Kavität, die der Grundkörper 2 und die Hülsenpartie 3 zwischen sich ausbilden, ist wiederum ein zusätzliches schwingungsreduzierendes Bauteil 7 gefangen.

Bei diesem Ausführungsbeispiel ist die Kavität in Richtung der Längsachse auffallend kurz ausgebildet, ihre Länge L_{K} beträgt hier weniger als 1/5 der Länge L_{W} der Werkzeugaufnahme. Das schwingungsreduzierende Bauteil 7 füllt die Kavität im Wesentlichen vollständig aus, so dass Entsprechendes für die in Richtung der Rotationsachse betrachtete Länge des schwingungsreduzierenden Bauteils gilt.

Bei diesem Ausführungsbeispiel wird das schwingungsreduzierende Bauteil 7 durch einen Ring gebildet, der vorzugsweise aus einem Schwermetall und/oder dem bereits oben benannten besonders schwingungsdämpfenden Metall besteht.

Anders als bei dem ersten Beispiel liegt dieser Ring allerdings mit seiner Umfangsfläche nicht unmittelbar gegen eine korrespondierende Umfangsfläche der Hülsenpartie 3 und/oder des Grundkörpers 2 an. Stattdessen liegt zwischen der Umfangsfläche des Rings und der korrespondierenden Umfangsfläche der Hülsenpartie 3 bzw. des Grundkörpers 2 eine Schicht, die hier als elastische Schicht 10 bezeichnet wird und die aus einem vorzugsweise weichelastischem Kunststoff oder einem Elastomermaterial besteht. Die Schicht ist vorzugsweise ringförmig ausgebildet und ist idealerweise mit einer in radialer Richtung gemessenen Dicke von nur 0,5 mm bis 3 mm recht dünn gehalten. Der Sinn dieser Schicht liegt darin, dem Ring eine Beweglichkeit in radialer Richtung zu ermöglichen, wobei bei der Materialauswahl und der Anordnung des besagten elastischen Materials darauf geachtet wird, dass dessen Elastizität bzw. Kompressibilität nicht etwa dadurch vereitelt wird, dass unbeabsichtigt ein hinderlicher hydrostatischer Spannungszustand in dem elastischen Material eintritt.

An den Stirnseiten des Rings ist vorzugsweise keine Schicht aus dem besagten weichelastischen Kunststoff oder Elastomermaterial vorgesehen. Die Stirnseiten des Rings liegen bei diesem Ausführungsbeispiel entweder nicht, oder ohne merkliche Vorspannung unmittelbar gegen die korrespondierenden Stirnseiten des Grundkörpers 2 und der Hülsenpartie 3 an oder unter einer begrenzten Vorspannung, die dafür sorgt, dass sich der Ring unter Entstehung entsprechender Reibungskräfte, die ebenfalls dämpfend wirken können, in radialer Richtung bewegen kann.

Bei einer derartigen Konstruktion wirkt der Ring gegenüber den an der Hülsenpartie 3 auftretenden Radialschwingungen tendenziell als Schwingungstilger, das heißt, der Ring hat die Tendenz, Gegenschwingungen auszuführen, die mit den an der Hülsenpartie 3 auftretenden Radialschwingungen zumindest teilweise interferieren und so die unerwünschten Radialschwingungen der Hülsenpartie 3 zumindest verringern.

Soll der Ring als ein solcher Schwingungstilger wirken, dann darf seine Masse nicht zu gering sein. Aufgrund dessen ist der Ring, wie man recht gut beim Vergleich der Figuren 3 und 1 nachvollziehen kann, bei diesem zweiten Ausführungsbeispiel in Richtung der Rotationsachse des Werkzeugspannfutters vorzugsweise breiter ausgeführt als der entsprechende Ring des ersten Ausführungsbeispiels. Anhand der Figur 3 ist deutlich zu erkennen, dass die maximale Erstreckung Bₘₐₓ der Ringscheibe bzw. des Rings parallel zur Rotationsachse aber immer noch um mehr als den Faktor 2,5 kleiner ist als der maximale Durchmesser Dₘₐₓ des Rings.

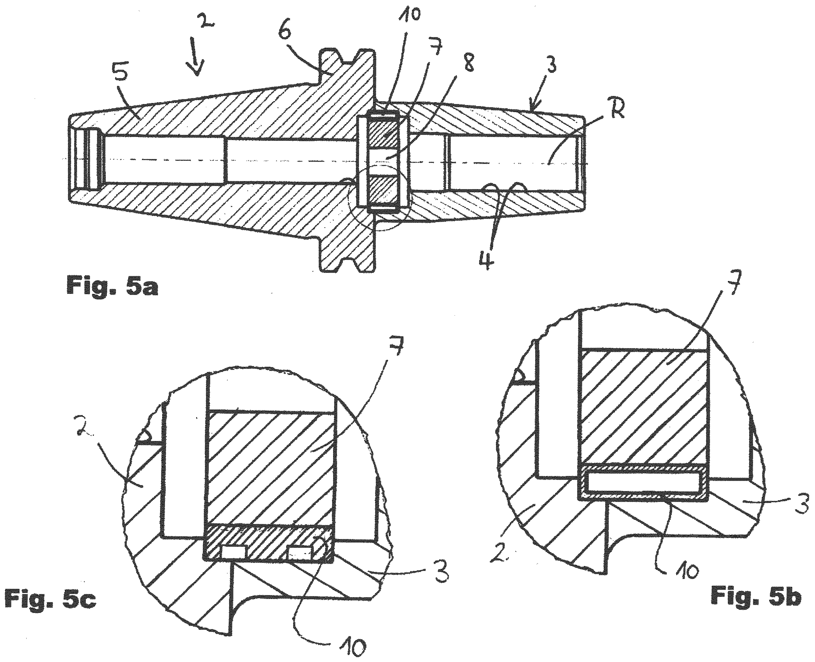

Die Figuren 5a und 5b zeigen eine erste Variante des soeben geschilderten Ausführungsbeispiels, für die das soeben zum Ausführungsbeispiel Gesagte in vollem Umfang gilt, soweit sich nicht aus der nachfolgenden Schilderung dessen, was abgewandelt wurde, etwas anderes ergibt.

Die Kavität ist hier sowohl in radialer Richtung als auch in Richtung der Rotationsachse R größer ausgeführt als das von ihr aufgenommene schwingungsreduzierende Bauteil 7, das hier die Gestalt eines Rings hat, der tendenziell als Schwingungstilger wirkt. Der Ring steht aufgrund dessen nirgendwo in unmittelbarem Kontakt mit den Begrenzungswänden der Kavität.

Zwischen der Umfangsfläche des Rings und der korrespondierenden Umfangsfläche der Hülsenpartie 3 bzw. des Grundkörpers 2 liegt eine Schicht, die hier auch als elastische Schicht 10 bezeichnet wird. Über diese Schicht steht der Ring an seinem Umfang mittelbar mit dem Innenumfang der Kavität in Kontakt, während die Stirnseiten des Rings vorzugweise vollkommen freigängig sind und von den stirnseitigen Begrenzungswänden der Kavität in Ruheposition vorzugweise einen freien Abstand von mindestens 5/10 mm, besser noch von mindestens 10/10 mm aufweisen.

Die besagte Schicht ist vorzugsweise so beschaffen, dass der Ring in seiner Ruheposition auch an seinem Außenumfang einen Abstand von mindestens 5/10 mm und idealerweise maximal 4/10 mm von der Umfangswand der Kavität einhält, da er ansonsten nicht genug Freigang besitzt, um die erforderlichen Schwingungen auszuführen, bzw. seine Schwingungsneigung zu groß wird.

Der Zweck dieser Schicht ist es, eine mehr als nur unwesentliche, schwingende Bewegung des Rings in im Wesentlichen radialer Richtung zuzulassen, dementsprechend ist sie ausgestaltet.

Diese Schicht wird vorzugsweise durch ein ringförmiges Element gebildet, das innen hohl und daher in radialer Richtung entsprechend kompressibel ist, vgl. Fig. 5b. Ein innen hohles, vorzugsweise in Umfangsrichtung in sich geschlossenes Element ist ideal, aber nicht die einzig denkbare Lösung. Stattdessen kann beispielsweise auch ein vorzugsweise in Umfangsrichtung in sich geschlossenes Element verwendet werden, das örtlich innen und/oder am Außenumfang ein oder mehrere Ausnehmungen besitzt, die eine entsprechende Kompressibilität herstellen, vgl. Fig. 5c. Schließlich ist als weitere Alternative an ein Element zu denken, dem die notwendige Kompressibilität bzw. Flexibilität in radialer Richtung dadurch verliehen wird, dass es aus geschäumtem Material besteht. Vorzugsweise ist das besagte ringförmige Element fest mit dem als Schwingungstilger vorgesehenen Ring verbunden, um ihn im Ruhezustand in einer definierten Position festzuhalten. Zu diesem Zweck ist das ringförmige Element entweder formschlüssig mit dem Ring verrastet und/oder vorzugsweise mit dem Ring verklebt bzw. an diesen anvulkanisiert bzw. angespritzt. Ideal ist es, wenn der Ring Formschlusselemente in Gestalt von Hinterschneidungen oder Erhebungen aufweist, in die das Material des Ringelements hineinfließt oder um die es herumfließt, so dass der Verbund zwischen dem Ring und dem ihn umgebenden Ringelement durch Formschluss gesichert wird und nicht allein von einer Verklebung abhängt, die sich mit der Zeit unter dem Einfluss der Schwingungen, die der Ring im Betrieb ausführt, lösen kann.

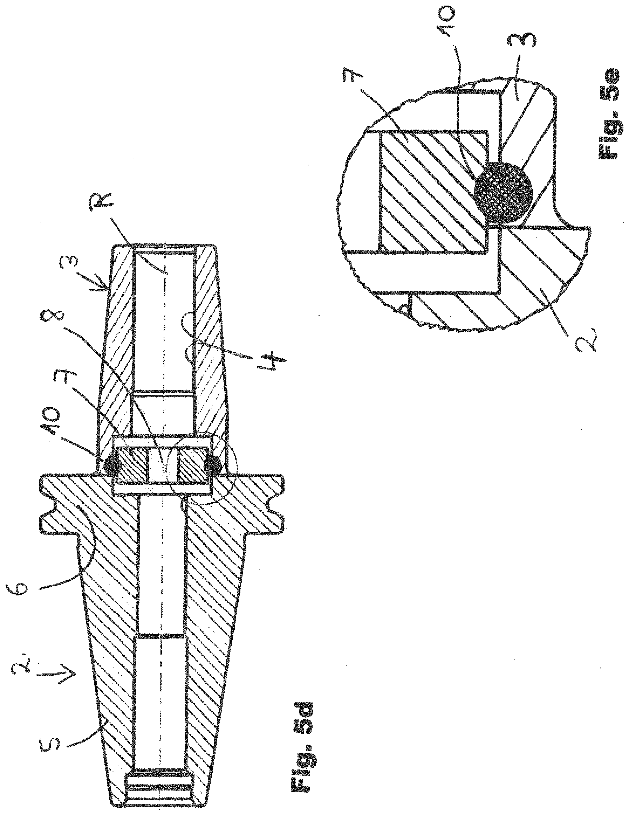

Die Figuren 5d und 5e zeigen eine zweite Variante des soeben geschilderten Ausführungsbeispiels. Für diese Variante gelten in vollem Umfang die obenstehenden Ausführungen für das Ausführungsbeispiel und dessen erste Abwandlung, soweit sich nicht aus der nachfolgenden Schilderung dessen, was abgewandelt wurde, etwas anderes ergibt.

Diese zweite Variante zeichnet sich dadurch aus, dass das soeben beschriebene ringförmige Element, welches den Ring so hält, dass er im Betrieb als Schwingungstilger wirken kann, als elastisches, vorzugsweise weich- oder gummielastisches Formschlusselement ausgeführt ist, das sich in montiertem Zustand in eine örtliche Vertiefung, vorzugsweise am Außenumfang des Rings, und eine weitere örtliche Vertiefung, vorzugsweise am Innenumfang der Kavität, einschmiegt - und so den Ring idealerweise allein durch Form- und Reibschluss in seiner bestimmungsgemäßen Ruheposition hält. Idealerweise handelt es sich bei dem ringförmigen Element um eine einzige oder mindestens eine, in Umfangsrichtung in sich geschlossene, Schnur, insbesondere in Gestalt eines sogenannten O-Rings, wie er in der Technik gemeinhin zu Dichtzwecken eingesetzt wird und daher in den unterschiedlichsten Stärken, Durchmessern und Qualitäten als preisgünstiges Standardelement "von der Stange" zur Verfügung steht.

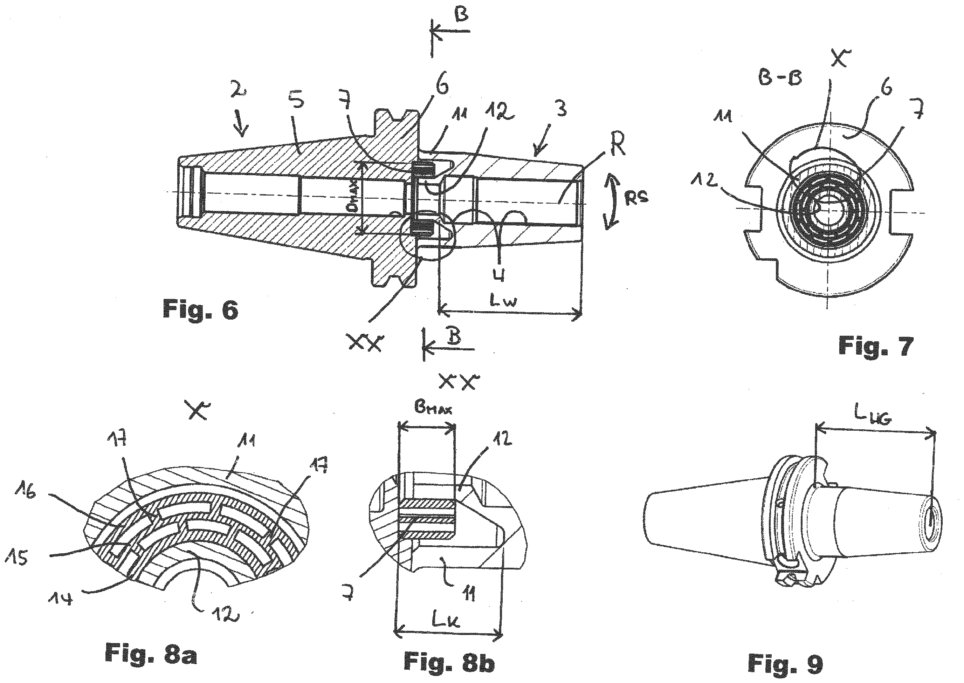

Die Figuren 6 bis 9 zeigen ein Ausführungsbeispiel der Erfindung.

Die Wirkungsweise dieses Ausführungsbeispiels der Erfindung unterscheidet sich deutlich von den anderen Ausführungsbeispielen, denn das schwingungsreduzierende Bauteil 7 ist hier deutlich anders gestaltet.

Der grundlegende Aufbau des Werkzeugspannfutters, der auch hier durch das Verschweißen eines Grundkörpers 2 mit der Hülsenpartie 3 oder dem einstückigen Aufbau durch Laser-Sintern oder dergleichen geprägt ist, entspricht allerdings dem der anderen Ausführungsbeispiele, weshalb das insoweit dort Gesagte auch hier gilt.

Ausweislich der Figur 6 beginnt auch bei diesem Ausführungsbeispiel im Bereich dieses Übergangs zwischen dem Grundkörper 2 und der Hülsenpartie 3 eine Kavität, die sich in Richtung der Rotationsachse R hin zu der Werkzeugaufnahme 4 erstreckt und die noch ein Stück weit in den Bereich des Halteflansches 6 hineinragt, diesen aber nicht bis in den Kupplungsabschnitt 5 hinein durchdringt.

Auch bei diesem Ausführungsbeispiel ist die Kavität in Richtung der Längsachse auffallend kurz ausgebildet, ihre Länge L_{K} beträgt hier weniger als 2/5 der Länge L_{W} der Werkzeugaufnahme, wobei auffällt, dass sich die Kavität ein Stück weit mit der Werkzeugaufnahme 7 überlappt, indem sie sich bis in die Umgebung des Auslaufs der Werkaufnahme hinein erstreckt.

Eine Besonderheit bei diesem Ausführungsbeispiel, die anhand der Figur 6 sofort ins Auge fällt, ist die, dass die Hülsenpartie 3 an ihrer zur Befestigung am Grundkörper 2 vorgesehenen Stirnseite einen ersten Ringflansch 11 und einen zweiten Ringflansch 12 aufweist. Der erste Ringflansch 11 dient zur Verbindung mit dem Grundkörper 2, vorzugsweise durch Verschweißen. Nur dieser Ringflansch 11 dient dem Grundkörper 2 zur Übertragung des von der Werkzeugmaschine aufgebrachten Drehmoments auf die Hülsenpartie 3. Der zweite Ringflansch 12 ist konzentrisch innerhalb des ersten Ringflansches 11 untergebracht, steht aber mit dem Grundkörper 2 nicht unmittelbar in Verbindung. Radialschwingungen des Hülsenabschnitts 3 in Richtung des Pfeils RS führen daher zu entsprechenden Bewegungen des zweiten Ringflansches 12. Das schwingungsreduzierende Bauteil 7 ist an dem zweiten Ringflansch 12 befestigt.

Das schwingungsreduzierende Bauteil 7 ist als separates, vom Grundkörper 2 und von der Hülsenpartie 3 getrenntes Bauteil ausgebildet. Es ist an dem zweiten Ringflansch befestigt und an seinem Außenumfang mit dem Grundkörper 2 verbunden. In diesem Fall beeinflusst das schwingungsreduzierende Bauteil 7 aufgrund seiner Masse und/oder vorzugsweise auch aufgrund seiner in sich vorhandenen, zu einem bestimmten Eigenschwingungsverhalten führenden Elastizität das Schwingungsverhalten des Ringflansches 12 maßgeblich, was insgesamt einen positiven Einfluss auf das Schwingungsverhalten des gesamten Systems hat.

Wie man sieht, ist das schwingungsreduzierende Bauteil 7 hier als Feder aufgebaut und kann daher in sich selbst schwingen; es ist vorzugsweise aus einem Federstahl gefertigt. Bei diesem Ausführungsbeispiel besteht das schwingungsreduzierende Bauteil aus drei Ringen 14, 15 und 16, die über Stege 17 federnd miteinander verbunden sind. Der innerste Ring 14 ist unmittelbar gegenüber der Hülsenpartie 3 festgelegt, der Ring 16 ist an seiner Außenseite vorzugsweise unmittelbar an dem Grundkörper festgelegt. Die beiden letztgenannten Ringe 15 und 16 können bei geeigneter Dimensionierung der Stege 17 gegenüber dem Ring 14 schwingen.

Um bei diesem Ausführungsbeispiel das Schwingungsverhalten des schwingungsreduzierenden Bauteils 7 zu beeinflussen, kann es sinnvoll sein, die zwischen den Stegen 17 befindlichen Freiräume mit einem schwingungsdämpfenden Material auszufüllen, beispielsweise aus Kunststoff.

Eine nicht erfindungsgemäße und nicht durch Figuren illustrierte Abwandlung dieses Ausführungsbeispiels sieht so aus, dass das schwingungsreduzierende Bauteil 7 hier kein in sich schwingendes Federelement ist, sondern ein vorzugweise massiver Ring, idealerweise aus einem Schwermetall. Dafür ist der zweite Ringflansch 12 derart dünnwandig ausgeführt, dass das von ihm gehaltene schwingungsreduzierende Bauteil 7 in Folge seiner Federwirkung im Betrieb zu Schwingungen angeregt wird, im Wesentlichen in radialer Richtung. Auch auf diese Art und Weise lässt sich ein Schwingungstilger realisieren, der das Schwingungsverhalten der Hülsenpartie 3 vorteilhaft beeinflusst. Selbstverständlich sind auch Mischformen möglich, bei denen das schwingungsreduzierende Bauteil 7 zum Teil in sich schwingt und zum Teil als Ganzes Schwingungen auf dem dünnwandig-federnd ausgebildeten zweiten Ringflansch ausführt.

Allen bislang geschilderten Ausführungsbeispielen ist gemeinsam, dass es vorteilhaft sein kann, die Kavität zusätzlich mit einer das Schwingungsverhalten positiv beeinflussenden Flüssigkeit zu füllen.

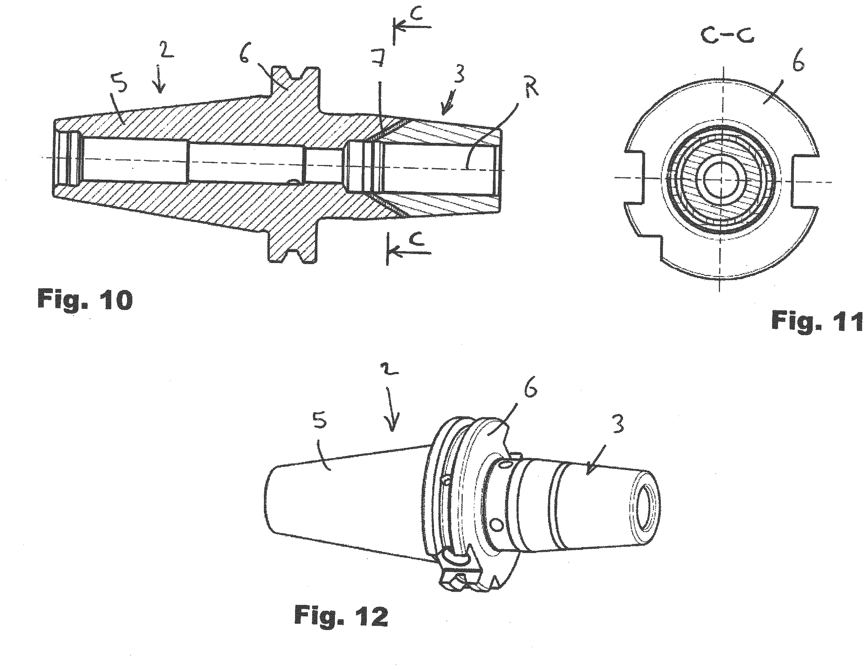

Die Figuren 10 bis 12 zeigen ein Ausführungsbeispiel der Erfindung.

Dieses Ausführungsbeispiel unterscheidet sich grundlegend von den zuvor beschriebenen Ausführungsbeispielen, denn das schwingungsreduzierende Bauteil stellt hier nicht ein Einlegeteil dar, sondern fungiert als zumindest im Wesentlichen voll im Kraftund Momentenfluss liegendes Verbindungsmittel, das den Grundkörper 2 und das Hülsenelement 3 zusammenhält.

Der Begriff "Bauteil" wird im Zusammenhang mit diesem Ausführungsbeispiel in einem weiten Sinne verwendet, denn das Bauteil muss kein irgendwann eigenständig gewesenes Bauteil sein, sondern kann eine Schicht sein, mit deren Hilfe der Grundkörper 2 und die Hülsenpartie 3 gefügt werden. Das schwingungsreduzierende Bauteil 7 kann beispielsweise aus einer Metallschicht oder einer entsprechend festen Kunststoffschicht bestehen, mit deren Hilfe der Grundkörper 2 und die Hülsenpartie 3 miteinander vergossen, verlötet oder im weitesten Sinne miteinander verklebt sind. Soweit es sich bei der Schicht um eine Metallschicht handelt, hat sich der Einbau einer Kupferschicht als besonders vorteilhaft erwiesen.

In jedem Fall wird die Dicke der besagten Schicht, die diese senkrecht zu den miteinander zu verbindenden Oberflächen besitzt, so ausgelegt, dass sich das gewünschte Dämpfungsverhalten ergibt. Hierfür lässt sich keine allgemeingültige Formel angeben, der Fachmann kann aber leicht durch die einschlägigen, fachüblichen Versuche herausfinden, wie dick die jeweilige Schicht sein muss, um das gewünschte Dämpfungsverhalten zu zeigen.

Es ist zweckmäßig, die Stirnseiten des Grundkörpers 2 und der Hülsenpartie 3, die mit Hilfe der besagten Schicht gefügt werden, derart kegel- oder kreisförmig auszubilden, dass die Hülsenpartie 3 und der Grundkörper 2 zentriert ineinander gepresst werden, wenn Vorschubkräfte oder entsprechende Reaktionskräfte auftreten, die in Richtung der Rotationsachse R des Werkzeugspannfutters 1 wirken.

Darüber hinaus ist die Oberfläche der mit Hilfe der besagten Schicht zu fügenden Stirnseiten der Hülsenpartie 3 und/oder des Grundkörpers 2 mit Hinterschneidungen oder einer Profilierung zu versehen, in die das Material der Schicht eindringen kann, so dass es auch zu einer Verankerung durch Formschluss und nicht lediglich durch Adhäsion kommt.

### Bezugszeichenliste

- 1: Werkzeugspannfutter
- 2: Grundkörper
- 3: Hülsenpartie
- 4: Werkzeugaufnahme
- 5: Kupplungsabschnitt
- 6: Halteflansch
- 7: schwingungsreduzierendes Bauteil
- 8: Öffnung des Rings
- 9: Schweißnaht
- 10: elastische Schicht am Umfang des Rings (auch als Zwischenlage bezeichnet)
- 11: erster Ringflansch
- 12: zweiter Ringflansch
- 13: Schicht zum Fügen des Grundkörpers und der Hülsenpartie
- 14: erster Ring des als Federelement ausgestalteten schwingungsreduzierenden Elements
- 15: zweiter Ring des als Federelement ausgestalteten schwingungsreduzierenden Elements
- 16: dritter Ring des als Federelement ausgestalteten schwingungsreduzierenden Elements
- 17: Steg des als Federelement ausgestalteten schwingungsreduzierenden Elements

- R: Rotationsachse
- RS: Schwingungspfeil
- L_{K}: Länge der Kavität in Richtung der Rotationsachse
- L_{W}: Länge der Werkzeugaufnahme in Richtung der Rotationsachse
- L_{HG}: Gesamtlänge der Hülsenpartie Bₘₐₓ Maximale Breite des Rings bzw. der Scheibe Dₘₐₓ Maximaler Durchmesser des Rings bzw. der Scheibe

## Patentansprüche

1. Werkzeugspannfutter (1) zum Spannen eines Werkzeugs in einer Werkzeugmaschine mit einem Grundkörper (2) und einer davon abstehenden Hülsenpartie (3), die eine Werkzeugaufnahme (4) zum kraftschlüssigen Festsetzen eines Werkzeugschafts ausbildet, wobei in dem Werkzeugspannfutter (1) eine Kavität ausgebildet ist, in der ein schwingungsreduzierendes Bauteil (7) angeordnet ist, wobei das schwingungsreduzierende Bauteil (7) als eine Scheibe ausgebildet ist, wobei die maximale Erstreckung (Bₘₐₓ₎) der Scheibe parallel zur Rotationsachse (R) kleiner ist als der maximale Durchmesser (Dₘₐₓ) der Scheibe, wobei die Scheibe mit einer Umfangsfläche über eine Zwischenlage (10) aus Kunststoff und/oder Elastomer gegen eine korrespondierende Umfangsfläche der Hülsenpartie (3) und/oder des Grundkörpers (2) anliegt, derart, dass die Scheibe im bestimmungsgemäßen Betrieb in radialer Richtung Relativbewegungen zu der Hülsenpartie (3) und dem Grundkörper (2) ausführen kann, wobei die Scheibe ein Ring (7) ist, **dadurch gekennzeichnet, dass** die Stirnseiten des Rings (7) mit einem freien Abstand nicht unmittelbar an den korrespondierenden Stirnflächen des Grundkörpers (1) und/oder der Hülsenpartie (3) anliegen oder die Stirnseiten des Rings (7) unmittelbar ohne oder mit begrenzter Vorspannung an den korrespondierenden Stirnflächen des Grundkörpers (1) und/oder der Hülsenpartie (3) anliegen.

2. Werkzeugspannfutter (1) nach Anspruch 1, **dadurch gekennzeichnet, dass** die Kavität im Bereich des Übergangs vom Grundkörper (2) zur Hülsenpartie (3) beginnt, sich entlang der Rotationsachse (R) in Richtung hin zu der Werkzeugaufnahme (4) erstreckt und in Richtung entlang der Rotationsachse (R) eine Länge (L_{K}) aufweist, die weniger als 2/5 und vorzugsweise weniger als 1/5 der Länge (L_{W}) der Werkzeugaufnahme (4) in dieser Richtung beträgt.

3. Werkzeugspannfutter (1) nach Anspruch 1 oder 2, **dadurch gekennzeichnet, dass** die Länge (L_{W}) der in der Hülsenpartie (3) ausgebildeten Werkzeugaufnahme (4) mehr als 3/4 und vorzugsweise mehr als 4/5 der Gesamtlänge (L_{HG}) der Hülsenpartie (3) ausmacht.

4. Werkzeugspannfutter (1) nach einem der vorhergehenden Ansprüche, **dadurch gekennzeichnet, dass** sich die Kavität unmittelbar an den Bereich des Durchmessersprungs anschließt, an dem die Hülsenpartie (3) in den Grundkörper (2) übergeht oder sogar innerhalb dieses Bereichs liegt, so dass der Durchmessersprung im Bereich der die Kavität begrenzenden Umfangswand stattfindet.

5. Werkzeugspannfutter (1) nach Anspruch 4, **dadurch gekennzeichnet, dass** die Kavität in Umfangsrichtung von einer Fügestelle zwischen dem Grundkörper (2) und der Hülsenpartie (3) umgriffen ist, die vorzugsweise als Schweißnaht ausgebildet ist.

6. Werkzeugspannfutter (1) nach einem der vorhergehenden Ansprüche, **dadurch gekennzeichnet, dass** das schwingungsreduzierende Bauteil (7) als eine massive, idealerweise metallene Scheibe und insbesondere als Ringscheibe mit einer zentrischen Öffnung (8) ausgebildet ist, und/oder dass gilt Bₘₐₓ / Dₘₐₓ ≤ 1/2 und idealerweise gilt Bₘₐₓ / Dₘₐₓ ≤ 1/3.

7. Werkzeugspannfutter (1) nach Anspruch 6, **dadurch gekennzeichnet, dass** die Scheibe aus einem Schwermetall oder einem Schwermetall enthaltenden Material hergestellt ist.

8. Werkzeugspannfutter (1) nach Anspruch 5 bis 7, **dadurch gekennzeichnet, dass** die Scheibe mit einer Umfangsfläche unmittelbar gegen eine korrespondierende Umfangsfläche der Hülsenpartie (3) und/oder des Grundkörpers (2) anliegt.

9. Werkzeugspannfutter (1) nach Anspruch 5 bis 8, **dadurch gekennzeichnet, dass** die Scheibe mit ihren Stirnflächen zwischen korrespondierenden Stirnflächen der Hülsenpartie (3) und des Grundkörpers (2) elastisch vorgespannt gehalten ist.

10. Werkzeugspannfutter (1) nach einem der vorhergehenden Ansprüche, **dadurch gekennzeichnet, dass** die Stirnflächen der Scheibe lediglich derart mit den korrespondierenden Stirnflächen der Hülsenpartie (3) und des Grundkörpers (2) in Kontakt stehen, dass die Scheibe durch die dort auftretende Reibung nicht immobilisiert wird.

11. Werkzeugspannfutter (1) zum Spannen eines Werkzeugs in einer Werkzeugmaschine mit einem Grundkörper (2) und einer davon abstehenden Hülsenpartie (3), die eine Werkzeugaufnahme (4) zum kraftschlüssigen Festsetzen eines Werkzeugschafts ausbildet, wobei in dem Werkzeugspannfutter eine Kavität ausgebildet ist, in der ein schwingungsreduzierendes Bauteil (7) angeordnet ist, wobei das schwingungsreduzierende Bauteil (7) ein Federelement ist, das innerhalb des Werkzeugspannfutters (1) so gehalten und dabei so ausgestaltet ist, dass es im Betrieb in sich zu Schwingungen angeregt wird - so, dass ein frei in die Kavität des Werkzeugspannfutters (1) hineinragender Teil des Federelementes im Betrieb gegenüber dem am Werkzeugspannfutter (1) festgesetzten Teil des Federelementes zu schwingen beginnt, **dadurch gekennzeichnet, dass** die Hülsenpartie (3) an ihrer dem Grundkörper (2) zugewandten Stirnseite einen ersten Ringflansch (11) zur Verbindung mit dem Grundkörper (2) und einen zweiten, konzentrisch innerhalb des ersten Ringflansches angeordneten und auch in fertig montiertem Zustand nicht unmittelbar mit dem Grundkörper (2) in Kontakt tretenden Flansch (12) aufweist, an dem sich das Federelement abstützt, während ein der Befestigungsstelle abgewandter Abschnitt des Federelements frei schwingbar in die Kavität hineinragt.

12. Werkzeugspannfutter (1) nach Anspruch 11, **dadurch gekennzeichnet, dass** das Federelement aus mindestens zwei, idealerweise mindestens drei ineinander liegenden Ringen besteht, die untereinander durch Stege (17) miteinander in Verbindung stehen.

13. Werkzeugspannfutter (1) zum Spannen eines Werkzeugs in einer Werkzeugmaschine mit einem Grundkörper (2) und einer davon abstehenden Hülsenpartie (3), die eine Werkzeugaufnahme (4) zum kraftschlüssigen Festsetzen eines Werkzeugschafts ausbildet, wobei in dem Werkzeugspannfutter (1) eine Kavität ausgebildet ist, in der ein schwingungsreduzierendes Bauteil (7) angeordnet ist, wobei der Grundkörper (2) und die Hülsenpartie (3) separate Bauteile sind, die nicht unmittelbar, sondern unter Vermittlung einer dämpfend wirkenden Materialschicht als schwingungsreduzierendes Bauteil zusammengefügt sind, wobei die Oberfläche der mit Hilfe der besagten Schicht zu fügenden Stirnseiten der Hülsenpartie (3) und/ oder des Grundkörpers (2) mit Hinterschneidungen oder einer Profilierung versehen ist, in die das Material der Schicht eindringen kann, so dass es auch zu einer Verankerung durch Formschluss und nicht lediglich durch Adhäsion kommt, **dadurch gekennzeichnet, dass** das schwingungsreduzierende Bauteil aus einer Metallschicht oder einer Kunststoffschicht besteht, mit deren Hilfe der Grundkörper (2) und die Hülsenpartie (3) miteinander vergossen, verlötet oder verklebt sind.

14. Werkzeugspannfutter (1) nach Anspruch 13, **dadurch gekennzeichnet, dass** die die Fuge bildenden Stirnflächen der Hülsenpartie (3) und/oder des Grundkörpers (2) Hinterschneidungen besitzen, in die die dämpfend wirkende Materialschicht zur Herstellung eines Formschlusses eindringen kann, und/oder dass die von der dämpfend wirkenden Materialschicht ausgefüllte Fuge zwischen der Hülsenpartie (3) und dem Grundkörper (2) keil- oder kegelförmig ausgebildet ist.

## Claims

1. Tool chuck (1) for clamping a tool in a machine tool and having a main body (2) and a sleeve part (3), which projects therefrom and forms a tool receptacle (4) for fixing a tool shank in place in a force-fitting manner, wherein a cavity, in which a vibration-reducing component (7) is arranged, is formed in the tool chuck (1), wherein the vibration-reducing component (7) is in the form of a disc, wherein the maximum extent (Bₘₐₓ) of the disc parallel to the axis of rotation (R) is smaller than the maximum diameter (Dₘₐₓ) of the disc, wherein the disc bears, by way of a circumferential surface via an intermediate layer (10) made from plastic and/or elastomer, against a corresponding circumferential surface of the sleeve part (3) and/or of the main body (2) in such a manner that the disc, during intended operation, can move relative to the sleeve part (3) and the main body (2) in the radial direction, wherein the disc is a ring (7), **characterized in that** the end sides of the ring (7) bear indirectly with a free spacing against the corresponding end surfaces of the main body (1) and/or of the sleeve part (3) or the end sides of the ring (7) bear directly without or with limited preload against the corresponding end surfaces of the main body (1) and/or of the sleeve part (3).

2. Tool chuck (1) according to Claim 1, **characterized in that** the cavity begins in the region of the transition from the main body (2) to the sleeve part (3), extends along the axis of rotation (R) in the direction towards the tool receptacle (4) and, in the direction along the axis of rotation (R), has a length (L_{K}) that is less than 2/5, and preferably less than 1/5, of the length (L_{W}) of the tool receptacle (4) in this direction.

3. Tool chuck (1) according to Claim 1 or 2, **characterized in that** the length (L_{W}) of the tool receptacle (4) formed in the sleeve part (3) constitutes more than 3/4, and preferably more than 4/5, of the total length (L_{HG}) of the sleeve part (3).

4. Tool chuck (1) according to one of the preceding claims, **characterized in that** the cavity directly adjoins the region of the change in diameter, at which the sleeve part (3) transitions into the main body (2), or even lies within this region, so that the change in diameter takes place in the region of the circumferential wall that delimits the cavity.

5. Tool chuck (1) according to Claim 4, **characterized in that** the cavity is encompassed, in the circumferential direction, by a joining point, which is preferably in the form of a weld seam, between the main body (2) and the sleeve part (3).

6. Tool chuck (1) according to one of the preceding claims, **characterized in that** the vibration-reducing component (7) is in the form of a solid, ideally metallic, disc and is in particular in the form of an annular disc with a central opening (8), and/or **in that** Bₘₐₓ/Dₘₐₓ ≤ 1/2 and ideally Bₘₐₓ/Dₘₐₓ ≤ 1/3.

7. Tool chuck (1) according to Claim 6, **characterized in that** the disc is produced from a heavy metal or a material containing heavy metal.

8. Tool chuck (1) according to Claims 5 to 7, **characterized in that** the disc bears, by way of a circumferential surface, directly against a corresponding circumferential surface of the sleeve part (3) and/or of the main body (2).

9. Tool chuck (1) according to Claims 5 to 8, **characterized in that** the disc is held, by way of its end surfaces, in an elastically preloaded manner between corresponding end surfaces of the sleeve part (3) and of the main body (2).

10. Tool chuck (1) according to one of the preceding claims, **characterized in that** the end surfaces of the disc are in contact with the corresponding end surfaces of the sleeve part (3) and of the main body (2) only in such a manner that the disc is not immobilized by the friction that occurs there.

11. Tool chuck (1) for clamping a tool in a machine tool and having a main body (2) and a sleeve part (3), which projects therefrom and forms a tool receptacle (4) for fixing a tool shank in place in a force-fitting manner, wherein a cavity, in which a vibration-reducing component (7) is arranged, is formed in the tool chuck, wherein the vibration-reducing component (7) is a spring element, which is held in such a manner within the tool chuck (1) and is in this case configured in such a manner that it, during operation, is itself caused to vibrate - such that a spring element part that projects freely into the cavity of the tool chuck (1), during operation, begins to vibrate in relation to the spring element part that is fixed in place on the tool chuck (1), **characterized in that** the sleeve part (3) has, on its end side that faces towards the main body (2), a first annular flange (11) for connecting to the main body (2), and a second flange (12), which is arranged concentrically within the first annular flange and also, in the fully assembled state, does not directly come into contact with the main body (2) and on which the spring element is supported, while a spring element portion that faces away from the fastening point projects into the cavity so as to be able to freely vibrate.

12. Tool chuck (1) according to Claim 11, **characterized in that** the spring element consists of at least two, ideally at least three, rings that lie inside one another and are each connected to one another by webs (17).

13. Tool chuck (1) for clamping a tool in a machine tool and having a main body (2) and a sleeve part (3), which projects therefrom and forms a tool receptacle (4) for fixing a tool shank in place in a force-fitting manner, wherein a cavity, in which a vibration-reducing component (7) is arranged, is formed in the tool chuck (1), wherein the main body (2) and the sleeve part (3) are separate components and are not joined together directly, but rather by means of a material layer with a damping action in the form of a vibration-reducing component, wherein the surface of the end sides, which are to be joined with the aid of said layer, of the sleeve part (3) and/or of the main body (2) is provided with undercuts or profiling that the material of the layer can enter, so that anchoring is also achieved by a form fit and not just by adhesion, **characterized in that** the vibration-reducing component consists of a metal layer or a plastics layer, with the aid of which the main body (2) and the sleeve part (3) are moulded, soldered or adhesively bonded together.

14. Tool chuck (1) according to Claim 13, **characterized in that** the join-forming end surfaces of the sleeve part (3) and/or of the main body (2) possess undercuts that the material layer with a damping action for producing a form fit can enter and/or **in that** the join, which is filled by the material layer with a damping action, between the sleeve part (3) and the main body (2) is wedge-shaped or conical.

## Revendications

1. Mandrin de serrage d'outil (1) pour le serrage d'un outil dans une machine-outil, avec un corps de base (2) et une partie de douille (3) dépassant de celui-ci, qui réalise un logement d'outil (4) pour la fixation par adhérence d'une tige d'outil, une cavité étant réalisée dans le mandrin de serrage d'outil (1), dans laquelle est agencé un composant réduisant les vibrations (7), le composant réduisant les vibrations (7) étant réalisé sous la forme d'un disque, l'extension maximale (Bₘₐₓ) du disque parallèlement à l'axe de rotation (R) étant inférieure au diamètre maximal (Dₘₐₓ) du disque, le disque s'appliquant par une face périphérique, par l'intermédiaire d'une couche intermédiaire (10) en matière plastique et/ou en élastomère, contre une face périphérique correspondante de la partie de douille (3) et/ou du corps de base (2), de telle sorte que le disque puisse effectuer des mouvements relatifs dans la direction radiale par rapport à la partie de douille (3) et au corps de base (2) pendant le fonctionnement conforme, le disque étant une bague (7), **caractérisé en ce que** les côtés frontaux de la bague (7) ne s'appliquent pas directement, avec un espacement libre, sur les faces frontales correspondantes du corps de base (1) et/ou de la partie de douille (3) ou les côtés frontaux de la bague (7) s'appliquent directement, sans précontrainte ou avec une précontrainte limitée, sur les faces frontales correspondantes du corps de base (1) et/ou de la partie de douille (3).

2. Mandrin de serrage d'outil (1) selon la revendication 1, **caractérisé en ce que** la cavité commence dans la zone de la transition du corps de base (2) à la partie de douille (3), s'étend le long de l'axe de rotation (R) en direction du logement d'outil (4) et présente, dans la direction le long de l'axe de rotation (R), une longueur (L_{K}) qui est inférieure aux 2/5 et de préférence inférieure à 1/5 de la longueur (L_{W}) du logement d'outil (4) dans cette direction.

3. Mandrin de serrage d'outil (1) selon la revendication 1 ou 2, **caractérisé en ce que** la longueur (L_{W}) du logement d'outil (4) réalisé dans la partie de douille (3) représente plus des 3/4 et de préférence plus des 4/5 de la longueur totale (L_{HG}) de la partie de douille (3) .

4. Mandrin de serrage d'outil (1) selon l'une quelconque des revendications précédentes, **caractérisé en ce que** la cavité se raccorde directement à la zone du saut de diamètre où la partie de douille (3) se transforme en le corps de base (2) ou se situe même à l'intérieur de cette zone, de telle sorte que le saut de diamètre a lieu dans la zone de la paroi périphérique délimitant la cavité.

5. Mandrin de serrage d'outil (1) selon la revendication 4, **caractérisé en ce que** la cavité est entourée dans la direction périphérique par un point d'assemblage entre le corps de base (2) et la partie de douille (3), qui est de préférence réalisé sous forme de cordon de soudure.

6. Mandrin de serrage d'outil (1) selon l'une quelconque des revendications précédentes, **caractérisé en ce que** le composant réduisant les vibrations (7) est réalisé sous la forme d'un disque massif, idéalement métallique, et notamment sous forme de disque annulaire avec une ouverture centrale (8), et/ou **en ce que** Bₘₐₓ/Dₘₐₓ ≤ 1/2 et idéalement Bₘₐₓ/Dₘₐₓ ≤ 1/3.

7. Mandrin de serrage d'outil (1) selon la revendication 6, **caractérisé en ce que** le disque est fabriqué à partir d'un métal lourd ou d'un matériau contenant un métal lourd.

8. Mandrin de serrage d'outil (1) selon les revendications 5 à 7, **caractérisé en ce que** le disque s'applique par une face périphérique directement contre une face périphérique correspondante de la partie de douille (3) et/ou du corps de base (2).

9. Mandrin de serrage d'outil (1) selon les revendications 5 à 8, **caractérisé en ce que** le disque est maintenu élastiquement précontraint par ses faces frontales entre des faces frontales correspondantes de la partie de douille (3) et du corps de base (2).

10. Mandrin de serrage d'outil (1) selon l'une quelconque des revendications précédentes, **caractérisé en ce que** les faces frontales du disque sont uniquement en contact avec les faces frontales correspondantes de la partie de douille (3) et du corps de base (2) de telle sorte que le disque ne soit pas immobilisé par le frottement qui s'y produit.

11. Mandrin de serrage d'outil (1) pour le serrage d'un outil dans une machine-outil, avec un corps de base (2) et une partie de douille (3) dépassant de celui-ci, qui réalise un logement d'outil (4) pour la fixation par adhérence d'une tige d'outil, une cavité étant réalisée dans le mandrin de serrage d'outil, dans laquelle est agencé un composant réduisant les vibrations (7), le composant réduisant les vibrations (7) étant un élément à ressort qui est maintenu à l'intérieur du mandrin de serrage d'outil (1) et qui est conçu de telle sorte qu'en fonctionnement, il est excité en lui-même pour vibrer - de telle sorte qu'une partie de l'élément à ressort pénétrant librement dans la cavité du mandrin de serrage d'outil (1) commence à vibrer en fonctionnement par rapport à la partie de l'élément à ressort fixée au mandrin de serrage d'outil (1), **caractérisé en ce que** la partie de douille (3) présente sur son côté frontal tourné vers le corps de base (2) une première bride annulaire (11) pour la liaison avec le corps de base (2) et une deuxième bride (12), agencée concentriquement à l'intérieur de la première bride annulaire et n'entrant pas directement en contact avec le corps de base (2), même à l'état entièrement monté, sur laquelle s'appuie l'élément à ressort, tandis qu'une section de l'élément à ressort, détournée du point de fixation, pénètre dans la cavité en pouvant vibrer librement.

12. Mandrin de serrage d'outil (1) selon la revendication 11, **caractérisé en ce que** l'élément à ressort est constitué d'au moins deux, idéalement d'au moins trois bagues imbriquées les unes dans les autres, qui sont reliées entre elles par des entretoises (17).

13. Mandrin de serrage d'outil (1) pour le serrage d'un outil dans une machine-outil, avec un corps de base (2) et une partie de douille (3) dépassant de celui-ci, qui réalise un logement d'outil (4) pour la fixation par adhérence d'une tige d'outil, une cavité étant réalisée dans le mandrin de serrage d'outil (1), dans laquelle est agencé un composant réduisant les vibrations (7), le corps de base (2) et la partie de douille (3) étant des composants séparés qui ne sont pas directement assemblés, mais par l'intermédiaire d'une couche de matériau à effet amortissant en tant que composant réduisant les vibrations, la surface des côtés frontaux de la partie de douille (3) et/ou du corps de base (2) à assembler à l'aide de ladite couche étant pourvue de contre-dépouilles ou d'un profilage dans lesquels le matériau de la couche peut pénétrer, de telle sorte qu'il en résulte également un ancrage par complémentarité de formes et pas seulement par adhésion, **caractérisé en ce que** le composant réduisant les vibrations est constitué d'une couche métallique ou d'une couche de matière plastique à l'aide de laquelle le corps de base (2) et la partie de douille (3) sont coulés, brasés ou collés ensemble.

14. Mandrin de serrage d'outil (1) selon la revendication 13, **caractérisé en ce que** les faces frontales de la partie de douille (3) et/ou du corps de base (2) formant le joint possèdent des contre-dépouilles dans lesquelles la couche de matériau à effet amortissant peut pénétrer pour créer une complémentarité de forme, et/ou **en ce que** le joint rempli par la couche de matériau à effet amortissant entre la partie de douille (3) et le corps de base (2) est réalisé en forme de coin ou de cône.
